# EUROPÄISCHE PATENTSCHRIFT

(11) **EP 2 711 158 B1**
(45) Veröffentlichungstag und Bekanntmachung des Hinweises auf die Patenterteilung: **22.07.2015**
(21) Anmeldenummer: 13185226.1
(22) Anmeldetag: 19.09.2013
(51) Int. Cl.: B29C 49/36, B29C 49/46, B29C 49/48

(54) **Verfahren zum Herstellen von Getränkebehältnissen und zum Auswechseln von Blasformteilen**
Method for producing beverage containers and replacement of blow-moulded articles
Procédé de fabrication de récipients pour boissons et de changement de pièces moulées par soufflage

(30) Priorität: 24.09.2012 DE 102012108978
(43) Veröffentlichungstag der Anmeldung: 26.03.2014
(73) Patentinhaber: Krones AG, 93073 Neutraubling (DE)
(72) Erfinder: Geltinger, Florian, 93073 Neutraubling (DE); Söllner, Jürgen, 93073 Neutraubling (DE); Müller, Holger, 93073 Neutraubling (DE)
(74) Vertreter: Bittner, Bernhard

(56) Entgegenhaltungen:
- EP-A1- 1 122 168
- DE-A1-102010 022 130
- DE-U1-202011 109 959

## Beschreibung

Die vorliegende Erfindung bezieht sich auf ein Verfahren und eine Vorrichtung zum Herstellen von Getränkebehältnissen. Derartige Verfahren und Vorrichtungen sind aus dem Stand der Technik seit langem bekannt. Bei der Abfüllung bestimmter Getränke ist es dabei erforderlich, dass wenigstens der Füllvorgang unter sterilen Bedingungen erfolgt. In jüngerer Zeit sind auch Umformungseinrichtungen zum Umformen von Kunststoffvorformlingen zu Kunststoffbehältnissen bekannt geworden, welche auch den Streckblasvorgang unter sterilen Bedingungen ermöglichen.

Bei der Umstellung auf die Produktion anderer Getränke bzw. anderer Getränkebehältnisse (z.B. Behältnisse mit einer vom vorher produzierten Behältnis abweichenden Form oder einem abweichenden Volumen) ist es dabei im Stand der Technik erforderlich, die Blasformen, innerhalb derer Kunststoffvorformlinge zu Kunststoffbehältnissen umgeformt werden, auszuwechseln. Dies geht üblicherweise einher mit einer Störung der Reinraumbedingungen.

Daher liegt der Erfindung die Aufgabe zugrunde, eine Möglichkeit zu schaffen, welche auch nach einem derartigen Wechsel von Blasformelementen, beispielsweise Blasformteilen, relativ schnell einen weiteren sterilen Betrieb der Maschine ermöglicht.

Bei einer aus dem Stand der Technik bekannten Vorgehensweise wird dabei speziell der Wechselvorgang für die Blasformteile mithilfe einer zusätzlichen Schleuse an der Blasmaschine vorgenommen. Dabei wird die Blasmaschine selbst gegenüber dieser Schleuse zunächst abgeriegelt und erst nach Vollzug des Wechsels der Blasformen werden über die Schleuse die Blasformen zugeführt. Diese Vorgehensweise erlaubt zwar eine Aufrechterhaltung des Reinraums, ist jedoch bedingt durch die zusätzliche Schleuse relativ aufwendig.

Die DE 202011109959 U1 beschreibt eine Getränkeabfüllanlage sowie eine Blasmaschine, wobei die Blasmaschine einen Reinraum mit einem Rüstzugang aufweist. Aus der DE 10 2010 022 130 A1 ist ebenfalls eine Blasmaschine mit einem Reinraum bekannt, wobei eine Antriebseinrichtung der Blasmaschine ausserhalb des Reinraums angeordnet ist.

Der vorliegenden Erfindung liegt daher die Aufgabe zugrunde, einen derartigen Wechsel von Maschinenelementen und insbesondere von Blasformteilen unter kostengünstigeren Bedingungen zu ermöglichen. Dies wird erfindungsgemäß durch ein Verfahren und eine Vorrichtung nach den unabhängigen Ansprüchen erreicht. Vorteilhafte Ausführungsformen und Weiterbildungen sind Gegenstand der Unteransprüche.

Bei einem erfindungsgemäßen Verfahren zum Auswechseln von Blasstationselementen bzw. Blasformelementen einer Blasformmaschine zum Umformen von Kunststoffvorformlingen zu Kunststoffbehältnissen weist eine derartige Blasformmaschine eine Vielzahl von Blasstationen auf, welche an einem bewegbaren Träger angeordnet sind, wobei diese Blasstationen jeweils mindestens ein auswechselbares Blasformelement aufweisen und wobei die Blasformmaschine weiterhin einen Reinraum aufweist, der einen Transportpfad der Kunststoffvorformlinge umgibt. Weiterhin ist diese Blasformmaschine als Anlagenteil einer Anlage zum Herstellen von Flüssigkeitsbehältnissen mit mehreren Anlagenteilen ausgebildet und wenigstens ein weiterer Anlagenteil weist ebenfalls einen Reinraum auf, der den Transportpfad der Kunststoffvorformlinge und/oder der Kunststoffbehältnisse in einem Bereich dieses Anlagenteils umgibt.

Bei dem erfindungsgemäßen Verfahren wird zunächst der Reinraum der Blasformmaschine geöffnet bzw. wenigstens eine Wandung, welche diesen Reinraum abgrenzt, geöffnet.

In einem weiteren Verfahrensschritt wird wenigstens ein und bevorzugt eine Vielzahl von Blasformelementen von der Blasformmaschine entnommen und insbesondere durch die (durch das Öffnen entstandene) Öffnung hindurch entnommen.

In einem weiteren Verfahrensschritt wird wenigstens ein und bevorzugt eine Vielzahl von zweiten Blasformelementen als Ersatz für das erste oder die ersten Blasformelemente in die Blasformmaschine eingebaut. In einem weiteren Verfahrensschritt wird der Reinraum der Blasformmaschine wieder verschlossen, insbesondere wird die Öffnung, die zuvor geöffnet wurde, wieder verschlossen.

Anschließend wird bevorzugt der Reinraum wieder mit einem Überdruck gegenüber einer (unsterilen) Umgebung beaufschlagt.

In einem weiteren Verfahrensschritt werden die eingefügten Blasformelemente im Inneren des Reinraums sterilisiert.

Erfindungsgemäß wird vor, während oder nach dem Öffnen des Reinraums (bzw. zum Zweck des Öffnens des Reinraums) wenigstens ein Parameter bzw. ein Betriebsmodus einer Lüftungssteuerung, welche eine Belüftung des Reinraum steuert, verändert und auch nach dem Schließen des Reinraums wird wenigstens ein Parameter dieser Lüftungssteuerung, welche die Belüftung des Reinraums steuert, wiederum verändert. Bevorzugt wird dabei der Parameter innerhalb eines vorgegebenen Zeitfensters vor während oder nach dem Öffnen des Reinraums verändert, beispielsweise innerhalb von ±1 Minute , bevorzugt von ± 30 Sekunden, bevorzugt von ±20 Sekunden, bevorzugt von ±10 Sekunden, bevorzugt von ±1 Sekunden. Bevorzugt wird der Parameter vor dem Öffnen des Reinraums verändert. Vorteilhaft erfüllen die ersten Blasformelemente und die zweiten Blasformelemente die gleiche technische Funktion.

Es wird daher erfindungsgemäß vorgeschlagen, dass insbesondere während des Wechselns der besagten Blasformelemente die Belüftung des Reinraums verändert wird.

Alternativ oder zusätzlich wäre es auch möglich, dass zumindest in dem Zeitraum, in welchem die Öffnung des Reinraums geöffnet ist, ein Innendruck in demjenigen oder denjenigen Reinräumen, welche an diesen Reinraum angrenzen (etwa den Reinräumen einer angrenzenden Fülleinrichtung und oder einer angrenzenden Sterilisationseinrichtung größer) ist als in dem Reinraum der Umformungseinrichtung. Dies kann dadurch erreicht werden, dass zum Zwecke des Öffnens der Innendruck in dem Reinraum der Umformungseinrichtung abgesenkt wird oder ein Absinken zugelassen wird. Es wäre jedoch auch möglich, dass in dem Reinraum der Umformungseinrichtung permanent, d.h. auch im normalen Arbeitsbetrieb ein geringerer Druck herrscht als in dem wenigstens einen angrenzenden Reinraum.

In diesem Falle tritt auch im Arbeitsbetrieb eine permanente Strömung von gasförmigem Medium, beispielsweise Sterilluft von den angrenzenden Reinräumen in den Reinraum der Umformungseinrichtung auf. Auch im Falle eines Wechselns der Blasformelemente bleiben dann zumindest diese Druckverhältnisse erhalten, so dass eine Kontamination des oder der angrenzenden Reinräume verhindert wird.

Unter den Blasformelementen werden insbesondere Blasformteile verstanden, das heißt diejenigen Elemente, innerhalb derer die Kunststoffvorformlinge zu den Kunststoffbehältnissen umgeformt werden. Die Erfindung ist jedoch auch auf andere Teile der Blasform bzw. der Blasstation anwendbar, beispielsweise auf Reckstangen, Blasdüsen und dergleichen, also auf alle Teile, die sich zumindest abschnittsweise, bevorzugt vollständig, innerhalb des Reinraums befinden. Diese Teile werden insoweit auch als Blasformelemente (dienend zum Blasformen) verstanden.

Durch die hier beschriebene Anpassung der Belüftung wird verhindert, dass unsteriles Medium, welches während des Wechsels der Blasformelemente in den Reinraum gelangt, auch andere Maschinenteile verunreinigt. Insbesondere wird der Luftzug stationär geschaltet. Das heißt die Regelung der Luftzufuhr wird abgeschaltet. Durch das Öffnen der besagten Öffnung würde der Luftdruck in dem Reinraum absinken, was dazu führen würde, dass eine Regelung die Luftzufuhr entsprechend erhöhen würde. Dies wird umgangen und es wird eine Absenkung des Luftdrucks im Inneren es Reinraums der Blasformmaschine bewusst zugelassen. Es wird damit bewusst zugelassen, dass die Sterilität des Reinraums nicht aufrecht erhalten bleibt, jedoch wird erreicht, dass die Sterilität angrenzender Reinräume aufrecht erhalten bleiben kann. In den angrenzenden Reinräumen, wie z.B. einer Füllvorrichtung , die insbesondere stromabwärts der Blasmaschine angeordnet ist und/oder einer Sterilisationsvorrichtung, die bevorzugt stromaufwärts der Blasmaschine angeordnet ist, kann bevorzugt ein Überdruck bereitgestellt werden, um eine Kontamination durch eventuell einströmende Luft (z.B. während des Blasformenwechsels) zu vermeiden.

Mit anderen Worten findet bevorzugt ein "Einfrieren" der Lüftungsregler statt. Diese Lüftungsregler haben im Produktionsbetrieb die Aufgabe, einen Überdruck innerhalb des Reinraums bzw. des Isolators im Blasrad sicherzustellen. Obwohl, wie oben erwähnt, die Tür geöffnet wird, erfolgt kein entsprechender Druckausgleich. Wie erwähnt, werden die Blasformelemente entnommen. Dabei werden bevorzugt die Blasformen aus ihren Formträgerschalen entnommen und neue Blasformen in die Formträgerschalen eingesetzt. Nach dem Schließen der Öffnung bzw. der Tür zum Reinraum wird wieder ein Überdruck durch die Lüftungsregler aufgebaut.

Vorteilhaft wird die Blasmaschine vor dem Beginn der Produktion dann wieder mit einem Sterilisationsmittel sterilisiert. Dabei kann eine oxidative Flüssigkeit, wie etwa Peressigsäure, verwendet werden oder auch (insbesondere gasförmiges) H₂O₂.

Vorteilhaft wird eine aseptische Blasmaschine mit einem neuen Formensatz bzw. mit Blasformen bestückt und anschließend für die Produktion vorbereitet.
Vorteilhaft wird kurz vor dem Öffnen des Reinraums zum Zwecke des Wechselns ein Druckgefälle innerhalb der Maschine geändert.

Bei einem bevorzugten Verfahren wird die Lüftungssteuerung wenigstens zeitweise in einem stationären Arbeitszustand betrieben, d.h. es werden besonders bevorzugt wenigstens zeitweise die Lüftungsregler "eingefroren" bzw. die eigentliche Regelung abgeschaltet.

Bei einem weiteren bevorzugten Verfahren wird erwärmte Luft in die Blasstationen eingeführt. Dieses Einblasen von heißer Luft, welches beispielsweise von einem Prozessmodul kommt, dient zum Zwecke der Sterilisierung der Maschinenteile bzw. der Blasformen. So wäre es beispielsweise möglich, dass der Blasformmaschine über eine Isolatorlüftung heiße Luft zugeführt wird. Diese Luft kann dabei Temperaturen zwischen 70° und 130°, bevorzugt zwischen 80° und 120° und besonders bevorzugt zwischen 90° und 110° aufweisen.

Dabei wird besonders bevorzugt die erwärmte Luft erst nach dem Schließen des Reinraums zugeführt. Damit wird nach dem Schließen des Reinraums, d.h. nachdem beispielsweise ein Formenwechsel stattgefunden hat, die Maschine wieder für den Arbeitsbetrieb vorbereitet.

Bei einem weiteren vorteilhaften Verfahren wird die erwärmte Luft wenigstens teilweise über eine Zuleitung für die Blasluft an die Blasstationen zugeführt. Diese Zuleitung für die Blasluft dient für den eigentlichen Expansionsvorgang der Kunststoffvorformlinge. Auf diese Weise wird in dem besagten Sterilisationsbetrieb die erwärmte Luft auch beispielsweise über eine Blasdüse in den Reinraum geführt. Auf diese Weise können auch diese Wege für die Blasluft sterilisiert werden.

Bevorzugt wird sowohl über die Isolatorluft- als auch über die Blasluftwege und bevorzugt auch den Blaskolben heiße Luft in die Maschine bzw. in deren Reinraum eingeleitet. Diese heiße Luft trocknet und erwärmt sowohl die Rohrleitungen, in denen sie transportiert wird, als auch den Formträger, die Blasformen und den Reinraum der Blasformmaschine.

Vorteilhaft wird den Blasstationen auch ein fließfähiges Sterilisationsmittel zugeführt. Dabei ist es möglich, dass, insbesondere nachdem ausreichend lange getrocknet und temperiert wurde, über den gleichen Weg auch gasförmiges H₂O₂ eingeleitet wird. Bevorzugt wird dieses Prozessgas dann eine gewisse Zeit eingeführt und sterilisiert so die Blasformmaschine. Nach diesem Sterilisationsvorgang ist die Blasformmaschine in einem sterilen Zustand und somit wiederum bereit für die aseptische Produktion. Vorteilhaft wird ab diesem Zeitpunkt, bzw. diesem Sterilisationsvorgang die Maschine in einem stabilen Zustand gehalten und kann nicht mehr geöffnet werden, da ansonsten die Sterilisation verloren gehen würde. Möchte man nun die Blasformmaschine auf ein anderes Behältnisformat umbauen, so muss der Reinraum zum Tauschen der Blasformen geöffnet werden.

Vorteilhaft kann der Maschinenbenutzer den Vorgang des Wechsels einleiten, beispielsweise, indem er eine entsprechende Eingabetaste betätigt. Dadurch werden, wie oben erwähnt, die Lüftungsregler, die für die Aufrechterhaltung des Überdrucks im Isolator verantwortlich sind, eingefroren, d.h. sie arbeiten bevorzugt von diesem Moment an nur noch stationär und regeln nicht mehr nach. Sobald die Lüftungstechnik diesen sicheren Zustand eingenommen hat, wird die Tür am Reinraum der Blasmaschine zum Öffnen freigegeben, damit der Benutzer die Blasformen oder andere Maschinenelemente wechseln kann.

Jetzt kann der Benutzer die Blasformen wechseln, wobei der Benutzer bevorzugt eine entsprechende hygienische Schutzkleidung trägt. Ist der Formenwechsel vollzogen, schließt der Benutzer die Öffnung wieder und bestätigt dies vorteilhaft an der Steuerung.

Danach wird der Regelmodus der Lüftungstechnik wieder freigegeben und der Reinraum wird auf einen Überdruck und vorzugsweise ein Überdruck zwischen 5 Pa und 20 Pa, bevorzugt zwischen 8 Pa und 12 Pa gehalten.

Anschließend wird bevorzugt, wie erwähnt, von dem Prozessmodul heiße Luft über die Blasluftwege in die einzelnen Blasstationen eingeleitet.

Nach einer entsprechenden Aufheizphase wird dann, wie erwähnt, das Sterilisationsmittel in die Blasstationen eingeleitet, um die neu eingesetzten Blasformen zu sterilisieren. Der Reinraum hat dabei vorteilhaft eine Temperatur, die der Betriebstemperatur der Blasmaschine entspricht oder bevorzugt auch höher liegt. In der Regel wird dabei der Reinraum auf eine Temperatur gebracht, die unter der Taupunkttemperatur des Sterilisationsmittel-Gas-/Luftgemisches liegt, so dass bevorzugt innerhalb des Reinraums eine Kondensation von Wasserstoffperoxid-Gas auftreten kann. Auch diese Kondensation wirkt dabei sterilisierend, sodass nach dieser Aktion die Blasmaschine wieder in einem sterilen Zustand versetzt wurde.

Vorteilhaft wird nach dem Zuführen des Sterilisationsmittels erneut erwärmte Luft zugeführt. Um das kondensierte Sterilisationsmittel wie H₂O₂-Gas wieder sicher abtrocknen zu können, kann nach der Behandlung mit dem Sterilisationsmittel noch mit heißer Luft für eine definierte Zeit nachgeblasen werden.

Durch die erfindungsgemäße Vorgehensweise ist es möglich, einen Wechsel von Blasformelementen und insbesondere von Blasformen an der aseptischen Blasformmaschine durchführen zu können, ohne dass ein kompletter Block der Anlage (beispielsweise ein Füller, ein Verschlusssterilisator, ein Preformsterilisator) selbst herabgefahren, gereinigt und sterilisiert werden müssen. Damit liegt der Vorteil der vorliegenden Erfindung in dem geringeren Zeitaufwand.

Die vorliegende Erfindung ist weiterhin auf eine Anlage zum Herstellen von Flüssigkeitsbehältnissen und insbesondere von Getränkebehältnissen gerichtet. Diese Anlage weist eine Umformungseinrichtung bzw. Blasmaschine zum Umformen von Kunststoffvorformlingen zu Kunststoffbehältnissen auf. Weiterhin weist diese Umformungseinrichtung eine Vielzahl von Blasstationen auf sowie eine Transporteinrichtung, welche die Kunststoffvorformlinge entlang eines vorgegebenen Transportpfads transportiert. Weiterhin weist die Vorrichtung eine Fülleinrichtung auf, welche entlang des Transportpfads stromabwärts der Umformungseinrichtung angeordnet ist, wobei die Umformungseinrichtung einen Reinraum aufweist, der den Transportpfad der Behältnisse wenigstens abschnittsweise umgibt, wobei dieser Reinraum von wenigstens einer Wandung (welche Bestandteil eines Gehäuses sein kann) gegenüber einer Umgebung abgegrenzt wird und wobei in dieser Wandung wenigstens eine verschließbare Öffnung vorgesehen ist, durch welche hindurch ein Wechsel von Blasformelementen und insbesondere von Blasformen ermöglicht ist.

Weiterhin weist auch die Fülleinrichtung einen Reinraum auf, innerhalb dessen die Behältnisse befüllt werden und weiterhin weist die Anlage eine Druckbeaufschlagungseinrichtung bzw. Lüftungseinrichtung auf, welche den Reinraum der Umformungseinrichtung mit einem Überdruck gegenüber einer Umgebung beaufschlagt sowie eine Steuerungseinrichtung bzw. Lüftungssteuerung, welche die Belüftung dieses Reinraums steuert.

Erfindungsgemäß ist wenigstens ein Parameter der Lüftungssteuerung in Abhängigkeit von einem Öffnungszustand der in der Wandung angeordneten Öffnung derart veränderbar, dass in einem geöffneten Zustand dieser Öffnung ein Strömen von in dem Reinraum der Umformungseinrichtung befindlichen gasförmigen Medium in den Reinraum der Fülleinrichtung verhindert wird.

Es wird daher auch vorrichtungsseitig vorgeschlagen, dass im Rahmen der Gesamtanlage sowohl der Umformungsprozess als auch der Füllprozess mittels bzw. innerhalb eines Reinraums vorgenommen wird und zumindest während eines Austauschens der Blasformelemente eine Kontamination von weiteren Reinräumen und insbesondere von solchen Reinräumen, welche an den Reinraum der Umformungseinrichtung angrenzen, verhindert wird.

Bei einer weiteren vorteilhaften Ausführungsform weist die Anlage noch weitere Behandlungseinrichtungen zum Behandeln von Kunststoffbehältnissen auf, wie beispielsweise Sterilisationseinrichtungen, Spüleinrichtungen, Erwärmungseinrichtungen zum Erwärmen der Kunststoffvorformlinge, Etikettiereinrichtungen und dergleichen.

Dabei kann vorgesehen sein, dass im Rahmen eines gewöhnlichen Arbeitsbetriebs ein Druckgefälle zwischen den einzelnen Reinräumen der Vorrichtung herrscht. So kann beispielsweise in dem Reinraum der Umformungseinrichtung ein höherer Druck herrschen als in dem Reinraum der Fülleinrichtung oder umgekehrt. Auch wäre es denkbar, dass die Steuerungseinrichtung, welche die Belüftung der einzelnen Reinräume mit Sterilluft steuert, derart eingestellt ist, dass permanent ein Druckgefälle von den angrenzenden Reinräumen hin zu dem Reinraum der Umformungseinrichtung herrscht, wobei jedoch der Innendruck in dem Reinraum der Umformungseinrichtung noch über dem Druck in der Umgebung liegt.

Bei einer weiteren vorteilhaften Ausführungsform der vorliegenden Erfindung beaufschlagen die oben erwähnten Beaufschlagungseinrichtungen die Reinräume mit einem sterilen Medium und insbesondere mit Sterilluft.

Bei einer weiteren vorteilhaften Ausführungsform weist die Vorrichtung auch eine Sterilisationseinrichtung zum Sterilisieren von Kunststoffbehältnissen auf. Vorteilhaft handelt es sich hierbei um eine Sterilisationseinrichtung, welche Kunststoffvorformlinge sterilisiert und diese ist besonders bevorzugt in der Transportrichtung der Kunststoffbehältnisse stromaufwärts bezüglich der Umformungseinrichtung angeordnet. Unter Kunststoffbehältnissen werden hier sowohl die Kunststoffvorformlinge als auch eventuell daraus hergestellte Kunststoffflaschen bezeichnet.

Bei einer bevorzugten Ausführungsform wird der Reinraum der Umformungseinrichtung von wenigstens zwei bezüglich einander beweglichen Wandungen abgegrenzt. So kann insbesondere eine radial äußere Wandung stationär angeordnet sein und in dieser stationären Wandung kann auch die besagte Öffnung angeordnet sein.

Vorteilhaft ist ein Antrieb, der eine Transporteinrichtung der Umformungseinrichtung, welche die Behältnisse transportiert, antreibt, stets außerhalb des Reinraums angeordnet.

Bei einer weiteren vorteilhaften Ausführungsform weist die Vorrichtung eine Zuführeinrichtung auf, über welche den Blasstationen ein erwärmtes gasförmiges Medium und/oder ein Sterilisationsmedium zuführbar ist. Dabei können als Zuführeinrichtung die Lüftungseinrichtungen verwendet werden, welche die Medien zuführen. Es wäre jedoch auch denkbar, dass als Zuführeinrichtung die Wege verwendet werden, die im Arbeitsbetrieb auch zur Beaufschlagung der Kunststoffvorformlinge mit Druckluft verwendet werden. So kann beispielsweise auch die erwärmte Luft und/oder das Sterilisationsmedium über Blasdüsen und Blasluftzuführungen zugeführt werden.

Bei einer weiteren vorteilhaften Ausführungsform sind auch Beaufschlagungseinrichtungen vorgesehen, welche Oberflächen von Blasformen insbesondere diejenigen Bereiche, die anschließend von den Kunststoffvorformlingen berührt werden, sterilisieren. Dabei ist es möglich, dass die Umformungseinrichtung eine Vielzahl von Düsen aufweist, welche die Blasformen bzw. deren Oberflächen selbst mit einem Sterilisationsmedium beaufschlagen. Dabei kann diese Düse stationär oder auch beweglich angeordnet sein.

Weitere Vorteile und Ausführungsformen ergeben sich aus der beigefügten Zeichnung.

Darin zeigt:

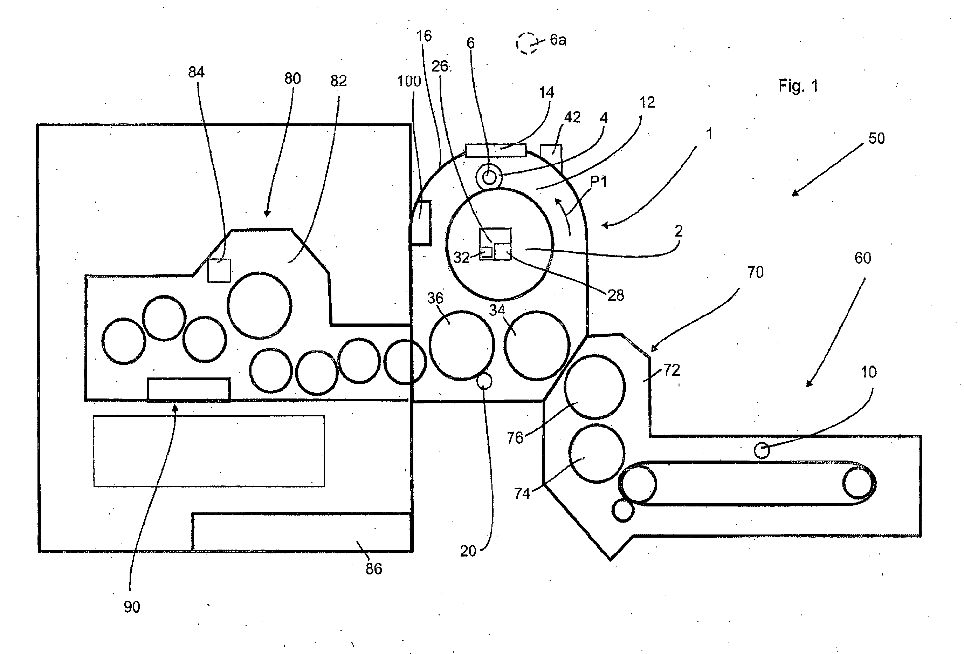

- Fig. 1: Eine schematische Darstellung einer erfindungsgemäßen Anlage zum Herstellen von Flüssigkeitsbehältnissen.

Fig. 1 zeigt eine in ihrer Gesamtheit mit 50 bezeichnete Anlage zum Herstellen von Flüssigkeitsbehältnissen und insbesondere von Getränkebehältnissen. Diese Anlage weist dabei eine Erwärmungseinrichtung 60 auf, die hier als Durchgangsofen ausgeführt ist, innerhalb derer die Kunststoffvorformlinge 10 erwärmt werden. An diese Erwärmungseinrichtung 60 schließt sich eine Sterilisationseinrichtung 70 an, welche die Kunststoffvorformlinge 10 innen und bevorzugt auch außen sterilisiert. Dabei kann diese Sterilisationsvorrichtung die Sterilisation mittels eines Sterilisationsmittels, wie beispielsweise Wasserstoffperoxid oder Peressigsäure vornehmen, es wäre jedoch auch möglich, dass die Sterilisation durch Beaufschlagung der Kunststoffvorformlinge mit UV oder Elektronenstrahlen erfolgt. Eine derartige Sterilisationseinrichtung zur Sterilisierung mit Elektronenstrahlen könnte dabei einen stangenartigen Körper aufweisen, der in das Innere der Behältnisse einführbar ist.

Diese Sterilisationseinrichtung 70 weist dabei bereits einen Reinraum 72 auf, innerhalb dessen die Kunststoffvorformlinge 10 gefördert werden. Es wäre jedoch auch möglich, dass bereits die Erwärmung unter sterilen Bedingungen und innerhalb eines Reinraum erfolgt, bei der in Fig. 1 gezeigten Ausführungsform beginnt jedoch der Reinraum erst bei der Sterilisationseinrichtung 70. Die Bezugszeichen 74 und 76 kennzeichnen zwei Transporteinrichtungen, welche die Kunststoffvorformlinge fördern. Diese können beispielsweise als Transportsterne ausgebildet sein, durch welche die Kunststoffvorformlinge entlang eines vorgegebenen Transportpfades durch die Anlage gefördert werden.

Das Bezugszeichen 1 kennzeichnet eine Umformungseinrichtung, welche ebenfalls Bestandteil der Anlage 50 ist. Diese Umformungseinrichtung 1 weist dabei einen drehbaren Träger 2 auf, an dem eine Vielzahl von Umformungsstationen 4 bzw. Blasstationen 4 angeordnet ist (in Fig. 1 nur eine derartige Umformungsstation gezeigt). Die Umformungseinrichtung 1 weist weiterhin ein Gehäuse 16 auf, welches zumindest den Transportpfad P1 der Kunststoffvorformlinge umgibt. Dieses Gehäuse 16 ist dabei bevorzugt stationär angeordnet. Innerhalb des Gehäuses bzw. innerhalb wenigstens einer und bevorzugt mehreren Wandungen wird damit auch ein Reinraum 12 ausgebildet, innerhalb dessen der Umformungsvorgang stattfindet. Unter einem Gehäuse wird hier allgemein eine Wandung oder eine Vielzahl von Wandung verstanden, welche den Reinraum umgibt. So wäre es möglich, dass der Reinraum kanalartig bzw. torusartig ausgeführt ist bevorzugt und die Reinraumgrenzen, also insbesondere die Wandungen des Reinraums nahe an die einzelnen Umformungsstationen 4 herangeführt sind (um so den Reinraum klein zu halten). In diesem Falle handelt es sich um ein "Gehäuse", das einerseits aus dem Träger und andererseits einer umgebenden Wand ausgebildet wird. Dabei ist jedoch die Öffnung, die zum Auswechseln der Blasformelemente dient, wiederum in einer dieser den Reinraum begrenzenden Wandungen angeordnet.

Das Bezugszeichen 14 kennzeichnet eine Öffnung in dem Gehäuse 16 (genauer in einer Wand des Gehäuses, welches den Reinraum umgibt), welche geöffnet werden kann um so Blasformelemente 6, wie beispielsweise Blasformteile, entnehmen, um andere Blasformteile 6a ersetzen zu können. Dabei kann diese Öffnung beispielsweise mit einer Schiebtüre oder aber einer insbesondere nach außen schwenkbaren Tür versehen sein. Neben den Blasformteilen weisen die einzelnen Blasstationen vorteilhaft auch andere Elemente auf wie beispielsweise Blasdüsen, Reckstangen und dergleichen.

Dabei weist diese Öffnung 14 einen Querschnitt auf, der ebenfalls ausreichend ist, um die Einwechselungen durchführen zu können. In einem geschlossenen Zustand der Öffnung 14 ist diese dabei hermetisch abgedichtet, sodass keine Luft durch diese Öffnung nach außen oder auch nach innen in den Reinraum 12 dringen kann. Das Bezugszeichen 26 kennzeichnet eine Lüftungseinrichtung, welche für eine Zuführung eines sterilen gasförmigen Mediums in den Reinraum 12 sorgt. Dabei können beispielsweise HEPA-Filter vorgesehen sein, um die Luft entsprechend zu filtern. Dabei bewirkt diese Lüftungseinrichtung bzw. Beaufschlagungseinrichtung 26, dass der Reinraum 12 stets unter einem Überdruck steht, um so Kontaminationen von außen her zu verhindern. Das Bezugszeichen 20 kennzeichnet ebenfalls wieder schematisch ein in der Umformungseinrichtung 1 hergestelltes Kunststoffbehältnis.

Die Lüftungseinrichtung 26 kann dabei eine Steuerungseinrichtung 28 aufweisen, welche die Belüftung des Reinraums 12 steuert bzw. bevorzugt regelt. Auch können innerhalb des Reinraums Druckmesseinrichtungen 32 vorgesehen sein, welche den Innendruck innerhalb des Gehäuses 16 messen, um auf diese Weise die Belüftung des Reinraums regeln zu können.

Die Bezugszeichen 34 und 36 kennzeichnen wiederum Transporteinrichtungen wie Transportsterne, welche die Behältnisse an den Träger 2 führen, bzw. von diesem wieder abführen. Diese Transporteinrichtungen 34 und 36 können sich dabei bevorzugt vollständig oder besonders bevorzugt zumindest abschnittsweise innerhalb des Reinraums befinden. Letzteres hat den Vorteil, dass Bereiche der Transporteinrichtungen 34 und 36, die eine Kontamination verursachen könnten, außerhalb des Reinraums angeordnet werden können und zur Reinraumgrenze hin, also dem Bereich zwischen dem sterilen und dem unsterilen Raum, entsprechend aseptisch abgedichtet werden können. Weiterhin kann auch eine Außendruckmesseinrichtung vorgesehen sein, welche einen Druck in der unsterilen Umgebung des Reinraums misst, um so eine entsprechende Steuerung des Innendrucks in dem Reinraum 12 zu ermöglichen. Daneben können auch Temperaturmesseinrichtungen vorgesehen sein, welche einen Innendruck des gasförmigen Mediums in dem Reinraum 12 messen sowie auch Temperaturmesseinrichtungen, welche eine Außentemperatur messen.

Es wäre weiterhin auch möglich, dass bei einem Öffnen des Reinraums 12 der Druck in den angrenzenden Reinräumen, insbesondere dem Reinraum der Fülleinrichtung, verändert und insbesondere erhöht wird, um so zusätzlich eine Kontamination dieser angrenzenden Reinräume zu verhindern. Diese Druckerhöhung kann dabei auch unabhängig von der hier beschriebenen Erfindung erfolgen also insbesondere unabhängig von dem hier beschriebenen "Einfrieren" der Lüftungsregelung für den Reinraum 12 der Umformungseinrichtung.

Das Bezugszeichen 80 kennzeichnet eine der Umformungseinrichtung 1 nachgeordnete Fülleinrichtung. Auch diese Fülleinrichtung weist dabei einen Reinraum 82 auf, der unter einem vorgegebenen Überdruck gehalten wird. Dabei kann vorgesehen sein, dass der Druck innerhalb des Reinraums 82 etwas geringer ist, als der Druck innerhalb des Reinraums 12. Es wäre jedoch auch denkbar, dass der Druck innerhalb des Reinraums 82 der Fülleinrichtung 80 größer ist als der Druck innerhalb des Reinraums 12. Auch der Druck innerhalb des Reinraums 72 ist bevorzugt in einem Arbeitsbetrieb niedriger als der Druck innerhalb des Reinraums 12. Es wäre jedoch auch denkbar, dass der Druck innerhalb des Reinraums 72 permanent größer ist als der Druck innerhalb des Reinraums 12.

Das Bezugszeichen 84 bezieht sich auf eine weitere Lüftungseinrichtung, welche auch den Reinraum 82 mit einem sterilen Gas und insbesondere mit Sterilluft versorgt.

Das Bezugszeichen 90 kennzeichnet eine weitere Sterilisationseinrichtung, welche zum Sterilisieren von Behältnisverschlüssen dient. Auch diese weitere Sterilisationseinrichtung 90 kann dabei innerhalb des Reinraums 82 vorgesehen sein. Das Bezugszeichen 86 kennzeichnet grobschematisch eine Steuerungseinrichtung zum Steuern der Anlage bzw. auch der Belüftungseinrichtung 84.

Falls nun ein Wechsel von Blasformelementen 6 in der Umformungseinrichtung 1 vorgenommen wird, wird, wie oben erwähnt, hierzu die Öffnung 14 geöffnet. Gleichzeitig wird die Steuerung 28, wie oben erwähnt, "eingefroren", sodass der absinkende Druck nicht kompensiert wird. Auf diese Weise wird verhindert, dass aus dem Sterilraum 12 kontaminierte Luft in einen der Sterilräume 82 oder 72 gelangen kann.

Das Bezugszeichen 42 kennzeichnet grob schematisch eine Eingabeeinrichtung, mit der der Benutzer diverse vollzogene Schritte bestätigen kann. So kann beispielsweise eine Taste vorgesehen sein, mit der der Benutzer bestätigen kann, dass ein Blasformwechsel stattgefunden hat. Auch können entsprechend Wechselvorgänge eingeleitet werden. Sobald der Benutzer durch Drücken dieser Taste bestätigt hat, dass die Blasformen gewechselt worden sind und auch wieder die Öffnung 14 abgeschlossen ist, kann an die Steuerung 28 wieder der Befehl ausgegeben werden, den Reinraum 12 unter den üblichen Arbeitsüberdruck zu setzen.

Mit anderen Worten wird die Umformungseinrichtung wieder in den Betriebszustand "Sterilisation" gesetzt und meldet ihn diesen auch bevorzugt zurück. Umgekehrt meldet die Steuerungseinrichtung 28 an den Benutzer den Zeitpunkt, ab dem die Produktion wieder starten kann, insbesondere wenn die Druckverhältnisse innerhalb des Reinraums wieder den Soll-Verhältnissen in einem Arbeitszustand entsprechen. Weiterhin weist die Umformungseinrichtung 1 auch eine in ihrer Gesamtheit schematisch mit 100 bezeichnete Sterilisationseinrichtung auf, welche dazu dient, um nach dem Wechsel der Blasformen sowohl den Reinraum 12 beispielsweise dessen Wandungen selbst zu sterilisieren als auch die eingewechselten Blasformen.

Dieser Sterilisationsvorgang erfolgt dabei, nachdem die Öffnung 14 wieder geschlossen wurde. Dabei kann die Sterilisationseinrichtung 100 in den Zustand "Zwischensterilisation" gesetzt werden. Sobald diese Zwischensterilisation beendet wird, kann die Sterilisationseinrichtung 100 in den Arbeitszustand "Produktionsvorbereitung und Produktion" gesetzt werden. Die Umformungseinrichtung 1 wird wieder in ihrer Gesamtheit von hier ab wieder in ihren Betriebszustand "Produktion" gesetzt und meldet diesen auch zurück. Sobald die Umformungseinrichtung 1 wieder den Zustand "Produktion" meldet, kann auch entsprechend die nachgeordnete Fülleinrichtung in den Produktionszustand versetzt werden.

Dabei kann der Befehl eines Produktionsneustarts an die Fülleinrichtung 80 ausgegeben werden. So können beispielsweise Produktventile, welche die Befüllung der Behältnisse steuern, wieder in einen aktiven Zustand gesetzt werden. Im Anschluss hieran kann wieder festgelegt werden, welche Arbeitsprogramme gestartet werden dürfen. So wäre es beispielsweise denkbar, dass ein Programm "Produktwechsel mit oder ohne Zwischenspülen" innerhalb der Fülleinrichtung 80 gestartet wird oder auch das Produktionsende eingeleitet wird.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Umformungseinrichtung
- 2: Träger
- 4: Blasstation
- 6: Blasformelemente
- 6a: einzuwechselnde Blasformelemente
- 10: Kunststoffvorformling
- 12: Reinraum
- 14: Öffnung
- 16: Gehäuse
- 20: Kunststoffbehältnisse
- 26: Lüftungseinrichtung
- 28: Steuerungseinrichtung
- 32: Druckmesseinrichtung
- 34/36: Transporteinrichtung
- 42: Eingabeeinrichtung
- 50: Anlage
- 60: Erwärmungseinrichtung
- 70: Sterilisationseinrichtung
- 72: Reinraum der Sterilisationseinrichtung
- 74/76: Transporteinrichtung
- 80: Fülleinrichtung
- 82: Reinraum der Fülleinrichtung 80
- 84: Lüftungseinrichtung
- 86: Steuerungseinrichtung
- 90: Sterilisationseinrichtung
- 100: Sterilisationseinrichtung

- P1: Transportpfad

## Patentansprüche

1. Verfahren zum Auswechseln von Blasformelementen (6) einer Blasformmaschine (1) zum Umformen von Kunststoffvorformlingen (10) zu Kunststoffbehältnissen (20) wobei die Blasformmaschine (1) eine Vielzahl von Blasstationen (4) aufweist, welche an einem bewegbaren Träger (2) angeordnet sind und diese Blasstationen (4) jeweils mindestens ein auswechselbares Blasformelement (6) aufweisen und wobei die Blasformmaschine (1) einen Reinraum (12) aufweist, der einen Transportpfad der Kunststoffvorformlinge (10) umgibt und wobei die Blasformmaschine (1) als Anlagenteil einer Anlage (50) mit mehreren Anlagenteilen (70, 1, 80, 90) ausgebildet ist und wenigstens ein weiterer Anlagenteil (70, 80) einen Reinraum (72, 82) aufweist, der den Transportpfad der Kunststoffvorformlinge (10) und/oder der Kunststoffbehältnisse (20) umgibt mit den Schritten:
- Öffnen des Reinraums (12) der Blasformmaschine (1),
- Entnahme mindestens eines ersten Blasformelements (6) von der Blasformmaschine (1)
- Einbau mindestens eines zweiten Blasformelements (6a) als Ersatz für das mindestens eine erste Blasformelement
in die Blasformmaschine (1)
- Verschließen des Reinraums (12) der Blasformmaschine (1)
- Beaufschlagen des Reinraums (12) mit einem Überdruck gegenüber einer Umgebung des Reinraums (12)
- Sterilisieren der Blasformelemente (6a)
**dadurch gekennzeichnet, dass**
vor, während oder nach dem Öffnen des Reinraums (12) wenigstens ein Parameter einer Steuerungseinrichtung (28), welche eine Belüftung des Reinraums (12) steuert, verändert wird und auch nach dem Schließen des Reinraums (12) wenigstens ein Parameter der Steuerungseinrichtung (28), welche eine Belüftung des Reinraums (12) steuert, verändert wird und/oder zumindest in dem Zeitraum, in welchem die Öffnung des Reinraums (12) geöffnet ist, ein Innendruck in denjenigen Reinräumen (72, 82), welche an diesen Reinraum (12) angrenzen größer ist als in dem Reinraum (12).

2. Verfahren nach Anspruch 1,
**dadurch gekennzeichnet, dass**
die Lüftungssteuerung wenigstens zeitweise in einem stationären Arbeitszustand betrieben wird.

3. Verfahren nach wenigstens einem der vorangegangenen Ansprüche,
**dadurch gekennzeichnet, dass**
erwärmte Luft in die Blasstationen (4) eingeführt wird.

4. Verfahren nach Anspruch 3,
**dadurch gekennzeichnet, dass**
die erwärmte Luft nach dem Schließen des Reinraums (12) zugeführt wird.

5. Verfahren nach Anspruch 3,
**dadurch gekennzeichnet, dass**
die erwärmte Luft wenigstens teilweise über eine Zuleitung für die Blasluft an die Blasstationen (4) zugeführt wird.

6. Verfahren nach wenigstens einem der vorangegangenen Ansprüche,
**dadurch gekennzeichnet, dass**
den Blasstationen (4) ein fließfähiges Sterilisationsmittel zugeführt wird.

7. Verfahren nach Anspruch 6,
**dadurch gekennzeichnet, dass**
nach dem Zuführen des Sterilisationsmittels erneut erwärmte Luft zugeführt wird.

8. Anlage zum Herstellen von Flüssigkeitsbehältnissen mit einer Umformungseinrichtung (1) zum Umformen von Kunststoffvorformlingen (10) zu Kunststoffbehältnissen, welche eine Vielzahl von Blasstationen (4) aufweist, mit einer Transporteinrichtung (2), welche die Kunststoffvorformlinge (10) entlang eines vorgegebenen Transportpfads (P1) transportiert und mit einer Fülleinrichtung (80), welche entlang des Transportpfads (P1) stromabwärts der Umformungseinrichtung. (1) angeordnet ist, wobei die Umformungseinrichtung (1) einen Reinraum (12) aufweist, der den Transportpfad (P1) der Behältnisse (10) wenigstens abschnittsweise umgibt, wobei dieser Reinraum (12) von wenigstens einer Wandung (16) gegenüber einer Umgebung abgegrenzt wird, und wobei in dieser Wandung (16) wenigstens eine verschließbare Öffnung (14) vorgesehen ist, durch welche hindurch ein Wechsel von Blasformelementen (6) und insbesondere von Blasformen ermöglicht ist, wobei auch die Fülleinrichtung (80) einen Reinraum (82) aufweist, innerhalb dessen die Behältnisse (20) befüllt werden und wobei die Anlage eine Druckbeaufschlagungseinrichtung (26) aufweist, welche den Reinraum (12) der Umformungseinrichtung (1) mit einem Überdruck gegenüber einer Umgebung beaufschlagt sowie eine Steuerungseinrichtung (28), welche die Belüftung des Reinraums (12) steuert,
**dadurch gekennzeichnet, dass**
dass wenigstens ein Parameter dieser Steuerungseinrichtung (28) in Abhängigkeit von einem Öffnungszustand der in der Wandung (16) angeordneten Öffnung (14) derart veränderbar oder einstellbar ist, dass in einem geöffneten Zustand dieser Öffnung (14) ein Strömen von in dem Reinraum (12) befindlichen gasförmigen Medium in den Reinraum (82) der Fülleinrichtung (80) verhindert wird.

9. Anlage nach Anspruch 8,
**dadurch gekennzeichnet, dass**
die Anlage eine Zuführungseinrichtung aufweist, über welche den Blasstationen (4) ein erwärmtes gasförmiges Medium und/oder ein Sterilisationsmedium zuführbar ist.

## Claims

1. A method of interchanging blow mould elements (6) of a blow moulding machine (1) for shaping plastics material pre-forms (10) into plastics material containers (20), wherein the blow moulding machine (1) has a plurality of blow moulding stations (4) which are arranged on a movable carrier (2), and these blow moulding stations (4) have in each case at least one interchangeable blow mould element (6) and wherein the blow moulding machine (1) has a clean room (12) which surrounds a conveying path of the plastics material preforms (10) and wherein the blow moulding machine (1) is designed in the form of a part of a plant (50) with a plurality of parts (70, 1, 80, 90), and at least one further part (70, 80) of the plant has a clean room (72, 82) which surrounds the conveying path of the plastics material preforms (10) and/or the plastics material containers (20), with the steps:
- opening the clean room (12) of the blow moulding machine (1),
- removing at least one first blow mould element (6) from the blow moulding machine (1),
- installing at least one second blow mould element (6a) as a replacement for the at least one first blow mould element in the blow moulding machine (1),
- closing the clean room (12) of the blow moulding machine (1),
- acting upon the clean room (12) with an over-pressure with respect to an environment of the clean room (12),
- sterilizing the blow mould elements (6a),
**characterized in that** at least one parameter of a control device (28) which controls an aeration of the clean room (12) is changed before, during or after the opening of the clean room (12), and at least one parameter of the control device (28) which controls an aeration of the clean room (12) is also changed after the closure of the clean room (12) and/or an internal pressure in the clean rooms (72, 82) adjacent to this clean room (12) is greater than in the clean room (12) at least during the period of time during which the opening of the clean room (12) is opened.

2. A method according to claim 1, **characterized in that** the aeration control means is operated at least for a time in a stationary operating state.

3. A method according to at least one of the preceding claims, **characterized in that** heated air is introduced into the blow moulding stations (4).

4. A method according to claim 3, **characterized in that** the heated air is supplied after the closure of the clean room (12).

5. A method according to claim 3, **characterized in that** the heated air is supplied at least in part to the blow moulding stations (4) by way of a supply line for the blow moulding air.

6. A method according to at least one of the preceding claims, **characterized in that** a flowable sterilization agent is supplied to the blow moulding stations (4).

7. A method according to claim 6, **characterized in that** heated air is supplied again after the supply of the sterilization agent.

8. A plant for the production of containers for liquids, with a shaping device (1) for shaping plastics material preforms (10) into plastics material containers, which has a plurality of blow moulding stations (4), with a conveying device (2) which conveys the plastics material preforms (10) along a pre-set conveying path (P1), and with a filling device (80) which is arranged downstream of the shaping device (1) along the conveying path (P1), wherein the shaping device (1) has a clean room (12) which surrounds the conveying path (P1) of the containers (10) at least in sections, wherein this clean room (12) is bounded off from an environment by at least one wall (16) and wherein this wall (16) has provided in it at least one closable opening (14) through which a change-over of blow mould elements (6), and in particular blow moulds, is made possible, wherein the filling device (80) also has a clean room (82) inside which the containers (20) are filled, and wherein the plant has a pressure-stressing device (26) which acts upon the clean room (12) of the shaping device (1) with an over-pressure with respect to an environment and a control device (28) which controls the aeration of the clean room (12), **characterized in that** at least one parameter of this control device (28) is capable of being changed or set in a manner dependent upon an opening state of the opening (14) situated in the wall (16), in such a way that in an opened state of this opening (14) a flow of gaseous medium present in the clean room (12) into the clean room (82) of the filling device (80) is prevented.

9. An apparatus according to claim 8, **characterized in that** the apparatus has a supply device, by way of which a heated gaseous medium and/or a sterilization medium is or are capable of being supplied to the blow moulding stations (4).

## Revendications

1. Procédé de changement d'éléments de moules de soufflage (6) d'une machine à moulage par soufflage (1) pour la transformation d'ébauches en matière plastique (10) en récipients en matière plastique (20), la machine de moulage par soufflage (1) comprenant une pluralité de postes de soufflage (4), qui sont disposés sur un support mobile (2) et ces postes de soufflage (4) comprenant chacun au moins un élément de moule de soufflage (6) interchangeable et la machine de moulage par soufflage (1) présentant un espace propre (12) qui entoure un trajet de transport des ébauches en matière plastique (10) et la machine de moulage par soufflage (1) étant conçue comme une partie d'une installation (50) avec plusieurs parties d'installation (70, 1, 80, 90) et au moins une partie d'installation supplémentaire (70, 80) comprenant un espace propre (72, 82) qui entoure le trajet de transport des ébauches en matière plastique (10) et/ou des récipients en matière plastique (20), avec les étapes suivantes :
- ouverture de l'espace propre (12) de la machine de moulage par soufflage (1),
- retrait d'au moins un premier élément de moule de soufflage (6) hors de la machine de moulage par soufflage (1),
- insertion d'au moins un deuxième élément de moule de soufflage (6a) en remplacement de l'au moins un premier élément de moule de soufflage dans la machine de moulage par soufflage (1)
- fermeture de l'espace propre (12) de la machine de moulage par soufflage (1)
- application dans l'espace propre (12) d'une surpression vis-à-vis d'un environnement de l'espace propre (12)
- stérilisation des éléments de moules de soufflage (6a)
**caractérisé en ce qu'**
avant, pendant ou après l'ouverture de l'espace propre (12), au moins un paramètre d'un dispositif de commande (28), qui commande une ventilation de l'espace propre (12), est modifié et commande, même après la fermeture de l'espace propre (12), au moins un paramètre du dispositif de commande (28), qui commande une ventilation de l'espace propre (12), est modifié et/ou, au moins dans la période, dans laquelle l'ouverture de l'espace propre (12) est ouverte, une pression interne est supérieure, dans les espaces propres (72, 82), qui sont adjacents à cet espace propre (12), à celle qui règne dans l'espace propre (12).

2. Procédé selon la revendication 1, **caractérisé en ce que** la commande de ventilation est utilisée au moins temporairement dans un état de fonctionnement stationnaire.

3. Procédé selon au moins l'une des revendications précédentes, **caractérisé en ce que** de l'air chauffé est introduit dans les postes de soufflage (4).

4. Procédé selon la revendication 3, **caractérisé en ce que** de l'air chauffé est introduit après la fermeture de l'espace propre (12).

5. Procédé selon la revendication 3, **caractérisé en ce que** l'air chauffé est introduit au moins partiellement par l'intermédiaire d'une conduite d'alimentation pour l'air de soufflage dans les postes de soufflage (4).

6. Procédé selon au moins l'une des revendications précédentes, **caractérisé en ce qu'**un produit de stérilisation fluide est introduit dans les postes de soufflage (4).

7. Procédé selon la revendication 6, **caractérisé en ce qu'**après l'introduction du produit de stérilisation, de l'air chauffé est à nouveau introduit.

8. Installation de fabrication de récipients pour des liquides avec un dispositif de transformation (1) pour la transformation d'ébauches en matière plastique (10) en récipients en matière plastique, qui comprend une pluralité de postes de soufflage (4), avec un dispositif de transport (2), qui transporte les ébauches en matière plastique (10) le long d'un trajet de transport (P1) prédéterminé et avec un dispositif de remplissage (80), qui est disposé le long du trajet de transport (P1), en aval du dispositif de transformation (1), le dispositif de transformation (1) comprenant un espace propre (12), qui entoure au moins partiellement le trajet de transport (P1) des récipients (10), cet espace propre (12) étant délimité, vis-à-vis de l'environnement, par au moins une paroi (16) et au moins une ouverture obturable (14) étant prévue dans cette paroi (16), à travers laquelle un changement des éléments de moules de soufflage (6) et plus particulièrement de moules de soufflage est possible, le dispositif de remplissage (80) comprenant également un espace propre (82) à l'intérieur duquel les récipients (20) sont remplis et l'installation comprenant un dispositif de pressurisation (26) qui applique dans l'espace propre (12) du dispositif de transformation (1) une surpression vis-à-vis de l'environnement, et un dispositif de commande (28), qui commande la ventilation de l'espace propre (12),
**caractérisé en ce**
**qu'**au moins un paramètre de ce dispositif de commande (28) peut être modifié ou réglé en fonction d'un état d'ouverture de l'ouverture (14) disposée dans la paroi (16), de façon à ce que, dans un état ouvert de cette ouverture (14) un écoulement d'un fluide gazeux se trouvant dans l'espace propre (12) vers l'espace propre (82) du dispositif de remplissage (80) soit empêché.

9. installation selon la revendication 8, **caractérisé en ce que** l'installation comprend un dispositif d'alimentation grâce à laquelle un fluide gazeux chauffé et/ou un fluide de stérilisation peut être introduit dans les postes de soufflage (4).
